# EUROPEAN PATENT APPLICATION

(11) **EP 4 593 439 A1**
(43) Date of publication of application: **30.07.2025**
(21) Application number: 23883170.5
(22) Date of filing: 27.10.2023
(51) Int. Cl.: H04W 12/106, H04W 76/19, H04W 76/14, H04W 88/04

(54) **METHOD AND APPARATUS FOR PROCESSING INTEGRITY OF REMOTE UE PACKET TRANSMITTED THROUGH UE RELAY IN WIRELESS COMMUNICATION SYSTEM**

(30) Priority: 27.10.2022 KR 20220140565
(71) Applicant: Samsung Electronics Co., Ltd., Suwon-si, Gyeonggi-do 16677 (KR)
(72) Inventor: KANG, Hyunjeong, Suwon-si, Gyeonggi-do 16677 (KR); BAEK, Sangkyu, Suwon-si, Gyeonggi-do 16677 (KR)
(74) Representative: Gulde & Partner
(86) International application number: PCT/KR2023/016894
(87) International publication number: WO 2024/091066

(57) **Abstract**

The present disclosure relates to a 5G or 6G communication system for supporting a higher data transmission rate.

## Description

### [Technical Field]

The disclosure relates to a wireless communication system. More particularly, the disclosure relates to a method and apparatus for handling the integrity of relay-transmitted packets by a UE that establishes a connection with another UE based on the sidelink with a relay UE and transmits and receives packets through relaying of the relay UE.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

In addition, direct communication between terminals (sidelink communication) using 5G communication systems is being studied, and it is expected that sidelink communication may be applied to, for example, vehicle-to-everything (V2X) communication and public safety networks to thereby provide various services to users.

In particular, there is a need for a method that utilizes sidelink relays that can support expansion of service coverage, increased reliability of data transmission, and reduced power consumption of terminals.

### [Disclosure of Invention]

### [Technical Problem]

An embodiment of the disclosure is to provide an apparatus and method capable of effectively providing a service in a wireless communication system.

The technical objectives to be achieved in the disclosure are not limited to those mentioned above, and other technical objectives not mentioned will be clearly understood by a person having ordinary skill in the art to which the disclosure belongs from the description below.

### [Solution to Problem]

In the disclosure for solving the above problem, a method performed by a first first UE in a wireless communication system may include: detecting a packet data convergence protocol (PDCP) integrity check failure; detecting a sidelink radio link failure (RLF) due to the PDCP integrity check failure; releasing a sidelink connection to a second UE in response to the sidelink radio link failure; and transmitting, to a relay UE, a message notifying the sidelink radio link failure due to the PDCP integrity check failure.

In an embodiment, the second UE may transmit, to the relay UE, the message notifying the sidelink radio link failure due to the PDCP integrity check failure.

In an embodiment, releasing a sidelink connection to a second UE may include at least one of releasing a data radio bearer (DRB) with the second UE, releasing a signaling radio bearer (SRB) with the second UE, releasing configuration information set for transmitting and receiving data and signaling with the second UE, or releasing a PC5 radio resource control (RRC) connection to the second UE.

In an embodiment, the relay UE may perform a procedure for releasing sidelink relay configuration information for the first UE and the second UE, resetting sidelink medium access control (MAC), and releasing or reestablishing sidelink radio link control (RLC) based on the message.

Additionally, in another embodiment of the disclosure, a method performed by a second UE in a wireless communication system may include: releasing a sidelink connection to a first UE in response to a sidelink radio link failure (RLF) at the first UE; and transmitting, to a relay UE, a message notifying the sidelink radio link failure due to a packet data convergence protocol (PDCP) integrity check failure, wherein the PDCP integrity check failure may be detected by the first UE, and the sidelink radio link failure may be detected due to the PDCP integrity check failure.

Additionally, in another embodiment of the disclosure, a first UE in a wireless communication system may include: a transceiver capable of transmitting and receiving at least one signal; and a controller coupled with the transceiver, wherein the controller may be configured to: detect a packet data convergence protocol (PDCP) integrity check failure; detect a sidelink radio link failure (RLF) due to the PDCP integrity check failure; release a sidelink connection to a second UE in response to the sidelink radio link failure; and transmit, to a relay UE, a message notifying the sidelink radio link failure due to the PDCP integrity check failure.

Additionally, in another embodiment of the disclosure, a second UE in a wireless communication system may include: a transceiver capable of transmitting and receiving at least one signal; and a controller coupled with the transceiver, wherein the controller may be configured to: release a sidelink connection to a first UE in response to a sidelink radio link failure (RLF) at the first UE; and transmit, to a relay UE, a message notifying the sidelink radio link failure due to a packet data convergence protocol (PDCP) integrity check failure, wherein the PDCP integrity check failure may be detected by the first UE, and the sidelink radio link failure may be detected due to the PDCP integrity check failure.

**The disclosure** relates to a method and apparatus for processing integrity protection for data or signaling of a UE in a system that relays data or signaling between UEs based on the sidelink with a relay UE in a wireless communication system. A method performed by a transmitting UE in a wireless communication system according to an embodiment of the present disclosure may include: checking whether PDCP PDU integrity protection is set to be applied to data or signaling to be transmitted, and transmitting the data or signaling to a receiving UE with applying or not applying PDCP PDU integrity protection to the data or signaling; receiving signaling indicating a PDCP PDU integrity protection failure for data or signaling from the receiving UE; triggering PDCP reestablishment with the receiving UE; performing an authentication and security setup procedure for integrity protection with the receiving UE during the PDCP reestablishment procedure with the receiving UE; and performing a procedure for MAC reset, and RLC reestablishment or RLC release with a sidelink relay that relays data or signaling with the receiving UE.

A method performed by a receiving UE in a wireless communication system according to an embodiment of the disclosure may include: checking whether PDCP PDU integrity protection is set to be applied to data or signaling received from a transmitting UE, and determining, when data or signaling is received from the transmitting UE, whether PDCP PDU integrity protection succeeds or fails for the corresponding packet; indicating PDCP PDU integrity failure to the higher layer upon determining that PDCP PDU integrity failure has occurred; deleting received packets that are determined to have failed in PDCP PDU integrity; transmitting signaling notifying a PDCP PDU integrity failure to the transmitting UE; triggering PDCP reestablishment with the transmitting UE; performing an authentication and security setup procedure for integrity protection with the transmitting UE during the PDCP reestablishment procedure with the transmitting UE; and performing a procedure for MAC reset, and RLC reestablishment or RLC release with a sidelink relay that relays data or signaling with the transmitting UE.

A method performed by a sidelink relay in a wireless communication system according to an embodiment of the disclosure may include: receiving signaling indicating that sidelink relay reconfiguration is required due to a PDCP PDU integrity failure from a transmitting UE or receiving UE; and performing a procedure for sidelink MAC reset, and sidelink RLC reestablishment or sidelink RLC release with the transmitting UE or receiving UE.

### [Advantageous Effects of Invention]

According to an embodiment of the disclosure, it is possible to provide an apparatus and method that effectively provide a service and expand service coverage in a wireless communication system.

The effects obtainable from the disclosure are not limited to those mentioned above, and other effects not mentioned will be clearly understood by a person skilled in the art to which the disclosure belongs from the description below.

### [Brief Description of Drawings]

FIG. 1A is a diagram illustrating a wireless communication system according to an embodiment of the disclosure.
FIG. 1B is a diagram illustrating a wireless communication system according to an embodiment of the disclosure.
FIG. 2 is a diagram illustrating the structure of a base station in a wireless communication system according to an embodiment of the disclosure.
FIG. 3 is a diagram illustrating the structure of a UE in a wireless communication system according to an embodiment of the disclosure.
FIG. 4 is a diagram illustrating the structure of a communication unit in a wireless communication system according to an embodiment of the disclosure.
FIG. 5 is a diagram illustrating the structure of time-frequency resources in a wireless communication system according to an embodiment of the disclosure.
FIG. 6 is a diagram illustrating a procedure for processing configuration information for relaying signaling and data in a wireless communication system in which a UE and another UE perform communication through a sidelink relay according to an embodiment of the disclosure.
FIG. 7 is a diagram illustrating a procedure for processing configuration information for transmitting and receiving signaling and data in a wireless communication system in which direct communication between UEs is performed according to an embodiment of the disclosure.
FIG. 8 is a diagram illustrating a procedure for handling integrity protection of a signaling packet received through a sidelink relay according to an embodiment of the disclosure.
FIG. 9 is a diagram illustrating a procedure for handling integrity protection of a signaling packet received through a sidelink relay according to an embodiment of the disclosure.
FIG. 10 is a diagram illustrating a procedure for handling integrity protection of a signaling packet received through a sidelink relay according to an embodiment of the disclosure.

### [Mode for the Invention]

Hereinafter, preferred embodiments of the disclosure will be described in detail with reference to the accompanying drawings. In this case, it should be noted that in the drawings, the same components are indicated by the same symbols as possible. In addition, detailed descriptions of well-known functions and configurations that may obscure the subject matter of the disclosure will be omitted.

In describing the embodiments in this specification, descriptions of technical contents that are well known in the art to which the disclosure belongs and are not directly related to the disclosure are omitted. This is to convey the gist of the disclosure more clearly without obscuring it by omitting unnecessary descriptions.

For the same reason, some components in the drawings are exaggerated, omitted, or schematically depicted. Additionally, the size of a component does not necessarily reflect the actual size. In the drawings, identical or corresponding components are given the same reference symbols.

The advantages and features of the disclosure and the methods for achieving them will become clear with reference to the embodiments described in detail below together with the accompanying drawings. However, the disclosure is not limited to those embodiments disclosed below and may be implemented in various different forms, and the present embodiments are provided only to make this disclosure complete and to fully inform a person having ordinary skill in the art to which the disclosure belongs of the scope of the disclosure, and the disclosure is defined only by the scope of the claims. Throughout the specification, identical reference symbols refer to identical components.

Meanwhile, it will be appreciated that blocks of a flowchart and a combination of flowcharts may be executed by computer program instructions. These computer program instructions may be loaded on a processor of a general purpose computer, special purpose computer, or programmable data processing equipment, and the instructions executed by the processor of a computer or programmable data processing equipment create a means for carrying out functions described in blocks of the flowchart. To implement the functionality in a certain way, the computer program instructions may also be stored in a computer usable or readable memory that is applicable in a specialized computer or a programmable data processing equipment, and it is possible for the computer program instructions stored in a computer usable or readable memory to produce articles of manufacture that contain a means for carrying out functions described in blocks of the flowchart. As the computer program instructions may be loaded on a computer or a programmable data processing equipment, when the computer program instructions are executed as processes having a series of operations on a computer or a programmable data processing equipment, they may provide steps for executing functions described in blocks of the flowchart.

In addition, each block of a flowchart may correspond to a module, a segment or a code containing one or more executable instructions for executing one or more logical functions, or to a part thereof. It should also be noted that functions described by blocks may be executed in an order different from the listed order in some alternative cases. For example, two blocks listed in sequence may be executed substantially at the same time or executed in reverse order according to the corresponding functionality.

Here, the word "unit", "module", or the like used in the embodiments may refer to a software component or a hardware component such as an FPGA (field programmable gate array) or ASIC (application-specific integrated circuit) capable of carrying out a function or an operation. However, "unit" or the like is not limited to hardware or software. A unit or the like may be configured so as to reside in an addressable storage medium or to drive one or more processors. For example, units or the like may refer to components such as a software component, object-oriented software component, class component or task component, processes, functions, attributes, procedures, subroutines, program code segments, drivers, firmware, microcode, circuits, data, databases, data structures, tables, arrays, or variables. A function provided by a component and unit may be a combination of smaller components and units, and it may be combined with others to compose larger components and units. Components and units may be implemented to drive one or more central processing units (CPUs) in a device or a secure multimedia card.

In specifically explaining the embodiments of the disclosure, the main targets are the New RAN (NR) radio access network and the packet core being the core network (5G system, or 5G core network, or NG Core: next generation core) on the 5G mobile communication standards specified by the 3GPP being a mobile communication standardization organization. However, the main gist of the disclosure may be applied to other communication systems having a similar technical background with minor modifications not departing from the scope of the disclosure, and this will be possible at the discretion of a person skilled in the art of the present disclosure.

In the 5G system, to support network automation, a network data collection and analysis function (NWDAF), which is a network function (NF) that analyzes data collected from a 5G network and provides the analysis results, may be defined. The NWDAF may collect/store/analyze information from 5G networks and provide the results to unspecified network functions (NFs), and the analysis results may be used independently by each NF.

For convenience of explanation below, some terms and names defined in the 3GPP (3rd generation partnership project long term evolution) standards (standards for 5G, NR, LTE or similar systems) may be used. However, the disclosure is not limited by these terms and names and may be equally applied to systems that comply with other standards.

The disclosure relates to a method and apparatus for handling the integrity of packets transmitted and received through relaying transmission of a sidelink relay when a UE is connected to another UE through the sidelink relay in a wireless communication system.

Embodiments of the disclosure may expand service coverage, increase reliability of data transmission and reception, and minimize battery usage of a UE by allowing the UE to transmit and receive data/signaling to and from another UE through a sidelink relay.

The terms used in the following description to refer to signals, channels, control information, network entities, and device components are illustrations for the convenience of explanation. Hence, the disclosure is not limited by the terms used, and other terms referring to objects having equivalent technical meanings may be utilized.

In the following description, the base station is a subject that performs resource allocation to the terminal, and may be at least one of gNode B, eNode B, Node B, BS, radio access unit, base station controller, or a node on a network. The terminal may include a user equipment (UE), a mobile station (MS), a cellular phone, a smartphone, a computer, or a multimedia system capable of performing a communication function. However, this is illustrative only, and the base station and the terminal are not limited to these examples. In this disclosure, for convenience of description, eNB may be used interchangeably with gNB. That is, a base station described as eNB may represent gNB. In the disclosure, the term 'terminal' may refer to various wireless communication devices as well as mobile phones, NB-IoT devices, and sensors.

In the following description, a physical channel or a signal may be used interchangeably with data or a control signal. For example, a physical downlink shared channel (PDSCH) is a term referring to a physical channel through which data is transmitted, but the PDSCH may also be used to refer to data. That is, in the disclosure, an expression "transmitting a physical channel" may be interpreted as being equivalent to an expression "transmitting data or a signal through a physical channel".

In the disclosure, higher signaling indicates a method of transmitting a signal from the base station to the UE by using a downlink data channel of the physical layer, or from the UE to the base station by using an uplink data channel of the physical layer. Higher signaling may be understood as radio resource control (RRC) signaling or medium access control (MAC) control element (CE).

Additionally, in the disclosure, to determine whether a specific condition is satisfied or fulfilled, an expression such as 'greater than' or 'less than' may be used, but this is illustrative and does not exclude the use of 'greater than or equal to' or 'less than or equal to'. In a certain condition, 'greater than or equal to', 'less than or equal to', and 'greater than or equal to and less than' may be replaced with 'greater than', 'less than', and 'greater than and greater than or equal to', respectively.

Additionally, in the disclosure, although the embodiments are described using terms used in some communication standards (e.g., 3rd generation partnership project (3GPP)), these are illustrative only for explanation. The embodiments of the disclosure may be applied to other communication systems with minor modifications.

In the disclosure, when a first UE is connected to a second UE through a sidelink relay in a wireless communication system, the first UE, the second UE, and the sidelink relay may be in RRC_CONNECTED state, RRC_INACTIVE state, RRC_IDLE state, and OUT-OF-COVERAGE state from the network perspective, and the states of the UEs including the sidelink relay may be managed independently. The first UE, the second UE, and the sidelink relay may be connected to the same cell, different cells, the same base station, or different base stations.

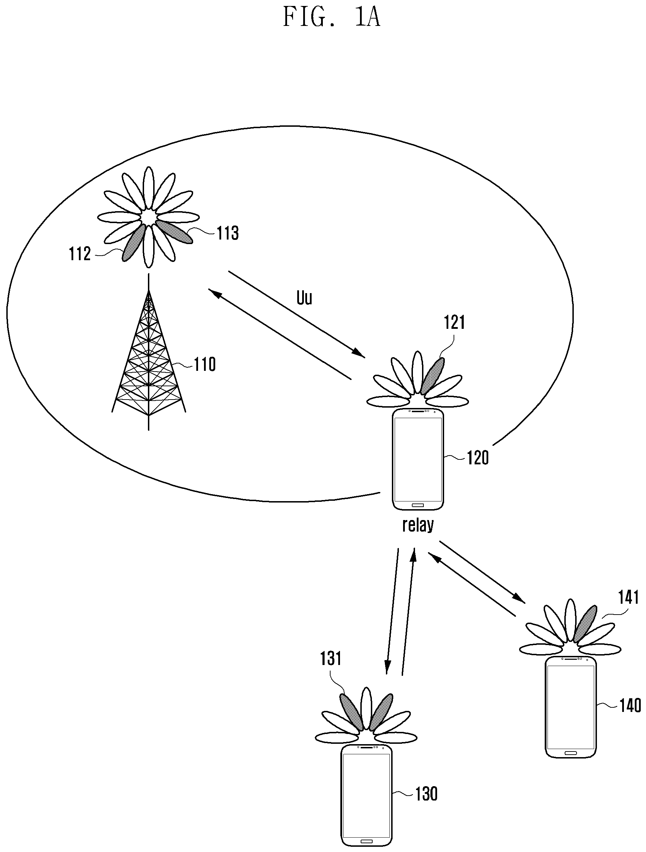

FIG. 1A is a diagram illustrating a wireless communication system according to an embodiment of the disclosure.

FIG. 1A illustrates, as some of nodes that utilize a radio channel in the wireless communication system, a base station 110, UEs 130 and 140, and a sidelink relay 120 that may relay data transmission and reception between the base station and the UE. According to an embodiment of the disclosure, the sidelink relay may be a U2N (UE-to-network) relay. Although FIG. 1A shows only one base station, other base stations identical or similar to the base station 110 may be included, and more relays may be included. That is, the configuration of the wireless communication system in FIG. 1A is illustrative, and other components not shown in FIG. 1A may be further included.

According to an embodiment of the disclosure, the base station 110 may be a network infrastructure that provides radio access to the UEs 130 and 140 and the relay 120. The base station 110 has coverage defined as a specific geographical area based on the distance at which a signal can be transmitted. The base station 110 may be referred to as 'access point (AP)', 'eNodeB (eNB)', '5G node (5^{th} generation node)', 'next generation nodeB (gNB)', 'wireless point', 'transmission/reception point (TRP)' or other terms having equivalent technical meanings in addition to 'base station'.

According to an embodiment of the disclosure, the relay 120 may be a device used by the user or network infrastructure, and may perform communication with the base station 110 through a radio channel. The link from the base station 110 to the relay 120 may be referred to as downlink (DL), and the link from the relay 120 to the base station 110 may be referred to as uplink (UL). The base station 110 and the relay 120 can be connected via the Uu interface. Uplink (UL) may refer to a radio link through which the relay 120 transmits data or a control signal to the base station 110, and downlink (DL) may refer to a radio link through which the base station 110 transmits data or a control signal to the relay 120.

In addition, the relay 120 may perform communication with the UE 130 and the UE 140 through radio channels. The link between the relay 120 and the UE 130 and the link between the relay 120 and the UE 140 may be referred to as sidelink, and the sidelink may also be referred to as the PC5 interface.

According to an embodiment of the disclosure, each of the UEs 130 and 140 is a device used by a user and may communicate with the base station 110 through a radio channel or communicate with the network through a radio channel and the relay 120.

In the disclosure, each of the UE 130 and the UE 140 may perform communication with the relay 120 through a radio channel. At least one of the UE 130 or the UE 140 may operate without user involvement. That is, at least one of the UE 130 or the UE 140 may be a device that performs machine type communication (MTC), and may be not carried by a user. Each of the UE 130 and the UE 140 may be referred to as 'user equipment (UE)', 'mobile station', 'subscriber station', 'remote terminal', 'wireless terminal', 'user device', or other terms having equivalent technical meanings in addition to 'terminal'.

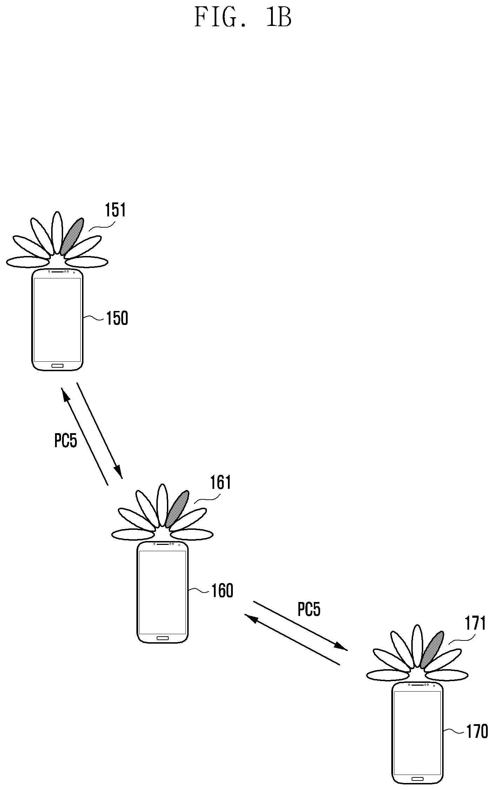

FIG. 1B is a diagram illustrating a wireless communication system according to an embodiment of the disclosure.

FIG. 1B illustrates a wireless communication system that includes UEs 150 and 170 and a sidelink relay 160 that can relay data transmission and reception between UEs, as some nodes utilizing radio channels in the wireless communication system. The sidelink relay 160 may be a U2U (UE-to-UE) relay. However, the wireless communication system is not limited to the examples described above. That is, the configuration of the wireless communication system in FIG. 1B is illustrative, and may further include other components not shown in FIG. 1B.

According to an embodiment of the present disclosure, the relay 160 may perform communication with the UE 150 and the UE 170 through a radio channel. Here, the link between the relay 160 and the UE 150 and the link between the relay 160 and the UE 170 may be referred to as sidelink, and the sidelink may also be referred to as the PC5 interface.

According to an embodiment of the disclosure, each of the UE 150 and the UE 170 may be a device used by a user, and may perform direct communication through a radio channel or may perform communication with the counterpart UE through the relay 160 and a radio channel. Here, the link between the UE 150 and the UE 170, the link between the UE 150 and the relay 160, and the link between the UE 170 and the relay 160 are referred to as sidelink, and the sidelink may also be referred to as the PC5 interface.

At least one of the UE 150 or the UE 170 may operate without user involvement. That is, at least one of the UE 150 or the UE 170 may be a device that performs machine type communication (MTC), and may be not carried by a user. Each of the UE 150 and the UE 160 may be referred to as 'user equipment (UE), 'mobile station', 'subscriber station', 'remote terminal', 'wireless terminal', 'user device', or other terms having equivalent technical meanings in addition to 'terminal'.

In the following description, uplink or downlink and Uu interface may be used interchangeably, and sidelink and PC-5 may be used interchangeably.

The base station 110, relays 120 and 160, and UEs 130, 140, 150 and 170 illustrated in FIGS. 1A and 1B may transmit and receive radio signals in the millimeter wave (mmWave) band (e.g., 28 GHz, 30 GHz, 38 GHz, 60 GHz). In this case, to improve the channel gain, the base station 110, relays 120 and 160, and UEs 130, 140, 150 and 170 may perform beamforming. Here, beamforming may include transmit beamforming and receive beamforming. That is, the base station 110, relays 120 and 160, and UEs 130, 140, 150 and 170 may give directivity to transmit signals or receive signals. To this end, the base station 110, relays 120 and 160, and UEs 130, 140, 150 and 170 may select serving beams 112, 113, 121, 131, 141, 151, 161 and 171 through a beam search or beam management procedure. After serving beams 112, 113, 121, 131, 141, 151, 161 and 171 are selected, communication may be performed through resources that are in a QCL (quasi co-located) relationship with the resources that have transmitted the serving beams 112, 113, 121, 131, 141, 151, 161 and 171.

According to an embodiment of the disclosure, if large-scale characteristics of a channel carrying symbols on a first antenna port may be inferred from a channel carrying symbols on a second antenna port, the first antenna port and the second antenna port may be evaluated to be in a QCL relationship. For example, the large-scale characteristics may include at least one of delay spread, Doppler spread, Doppler shift, average gain, average delay, or spatial receiver parameters.

The UE 130, UE 140, UE 150, and UE 170 illustrated in FIG. 1A and FIG. 1B may support vehicular communication. In the case of vehicular communication, standardization for vehicle-to-everything (V2X) technology based on the device-to-device (D2D) communication structure has been completed in 3GPP Release 14 and Release 15 for the LTE system, and standardization for V2X technology based on 5G NR has been completed in 3GPP Release 16. NR V2X may support unicast communication between UEs, groupcast (or multicast) communication, and broadcast communication. Further, unlike LTE V2X which aims to transmit and receive basic safety information necessary for the vehicle to drive on the road, NR V2X aims to provide more advanced services such as platooning, advanced driving, extended sensor, and remote driving. V2X services may be divided into basic safety services and advanced services. The basic safety services may include vehicle notification (cooperative awareness message (CAM) or basic safety message (BSM)) services, and detailed services such as left turn notification, forward collision warning, emergency vehicle approaching, forward obstacle warning, and intersection movement information; and V2X information may be transmitted and received by using broadcast, unicast, or groupcast transmission. The advanced services not only have enhanced quality of service (QoS) requirements compared to the basic safety services but also require a method for transmitting and receiving V2X information by using unicast and groupcast in addition to broadcast so that V2X information can be transmitted and received within a specific vehicle group or between two vehicles. The advanced services may include detailed services such as platooning, autonomous driving, remote driving, and extended sensor-based V2X service. In addition, NR V2X may provide public safety services by supporting direct communication between UEs in areas without network infrastructure.

In the following description, the sidelink (SL) refers to a signal transmission/reception path between UEs or a signal transmission/reception path between the UE and the relay, and may be used interchangeably with PC5 interface. Also, the base station is a main agent that allocates resources to the UE and the relay, and it may be a base station that supports both V2X communication and regular cellular communication or a base station that supports only V2X communication. That is, the base station may mean an NR base station (e.g., gNB), an LTE base station (e.g., eNB), or a road side unit (RSU). The UE may include not only a general user equipment and a mobile station but also include a vehicle supporting vehicle-to-vehicle (V2V) communication, a vehicle or pedestrian handset (i.e., smartphone) supporting vehicle-to-pedestrian (V2P) communication, a vehicle supporting vehicle-to-network (V2N) communication, a vehicle supporting vehicle-to-infrastructure (V2I) communication, an RSU equipped with UE functionality, an RSU equipped with base station functionality, and an RSU equipped with some of base station functionality and some of UE functionality.

Meanwhile, in the disclosure, the UE may refer to a vehicle supporting vehicle-to-vehicle (V2V) communication, a vehicle or pedestrian's handset (e.g., smartphone) supporting vehicle-to-pedestrian (V2P) communication, a vehicle supporting vehicle-to-network (V2N) communication, or a vehicle supporting vehicle-to-infrastructure (V2I) communication. The UE may refer to a user device that supports device-to-device communication in the public safety network.

Additionally, in the disclosure, the UE may refer to a road side unit (RSU) equipped with UE functionality, an RSU equipped with base station functionality, or an RSU equipped with some of base station functionality and some of UE functionality.

In the disclosure, the relay may refer to a vehicle supporting V2X communication or a user device supporting device-to-device communication in a public safety network. Additionally, in the disclosure, the relay may refer to a device equipped with UE functionality, a device equipped with base station functionality, or a device equipped with some of base station functionality and some of UE functionality.

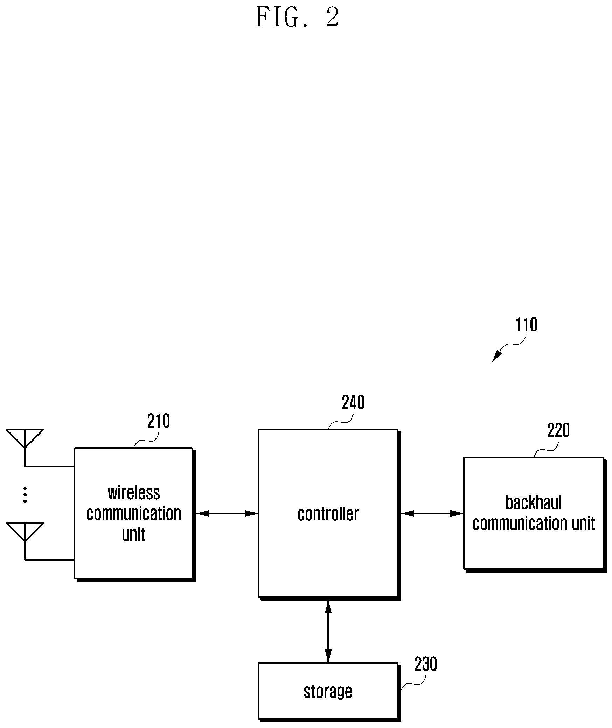

FIG. 2 is a diagram illustrating the structure of a base station in a wireless communication system according to an embodiment of the disclosure.

The configuration shown in FIG. 2 may be understood as a configuration of the base station 110. A term such as "... unit" or "... device" used herein means a unit that processes at least one function or operation, and may be implemented with hardware, software, or a combination thereof.

With reference to FIG. 2, the base station 110 may include a wireless communication unit 210, a backhaul communication unit 220, a storage 230, and/or a controller 240. However, the components of the base station 110 are not limited to those described above. For example, the base station may include more or fewer components than those components described above. In addition, the wireless communication unit 210, backhaul communication unit 220, storage 230, and controller 240 may be implemented in the form of a single chip. Further, the controller 240 may include one or more processors.

The wireless communication unit 210 may perform functions for transmitting and receiving signals through a radio channel. For example, the wireless communication unit 210 may perform conversion between a baseband signal and a bit stream in accordance with the physical layer specification of the system. For instance, for data transmission, the wireless communication unit 210 may generate complex symbols by encoding and modulating a transmission bit stream. Further, for data reception, the wireless communication unit 210 may restore a reception bit stream by demodulating and decoding a baseband signal.

In addition, the wireless communication unit 210 may perform up-conversion of a baseband signal into a radio frequency (RF) band signal and transmit the converted signal through an antenna, and may perform down-conversion of an RF-band signal received through an antenna into a baseband signal. To this end, the wireless communication unit 210 may include a transmission filter, a reception filter, an amplifier, a mixer, an oscillator, a digital-to-analog converter (DAC), and/or an analog-to-digital converter (ADC). Also, the wireless communication unit 210 may include a plurality of transmission and reception paths. Further, the wireless communication unit 210 may include at least one antenna array composed of plural antenna elements.

In terms of hardware, the wireless communication unit 210 may be composed of a digital unit and an analog unit, and the analog unit may be composed of a plurality of sub-units according to the operating power, operating frequency, and/or the like. The digital unit may be implemented with at least one processor (e.g., digital signal processor (DSP)). In the disclosure, the expressions "be composed of" or "be implemented with" may be replaced with the expression "include". For example, the analog unit may include a plurality of sub-units depending on the operating power and/or the operating frequency. For example, the digital unit may include at least one processor.

The wireless communication unit 210 transmits and receives signals as described above. Hence, the whole or a part of the wireless communication unit 210 may be referred to as 'transmitter', 'receiver', or 'transceiver'. Also, in the following description, transmission and reception performed through a radio channel is used as having a meaning of processing performed by the wireless communication unit 210 as described above.

The backhaul communication unit 220 may provide an interface for performing communication with other nodes on the network. That is, the backhaul communication unit 220 may convert a bit stream to be transmitted from the base station 110 to another node, for example, another access node, another base station, higher node, or core network, into a physical signal, and may convert a physical signal received from another node into a bit stream.

The storage 230 may store data such as basic programs, application programs, and configuration information for the operation of the base station 110. The storage 230 may be configured as a volatile memory, a non-volatile memory, or a combination thereof. In addition, the storage 230 may provide stored data in response to a request from the controller 240.

The controller 240 may control the overall operation of the base station 110. For example, the controller 240 may transmit and receive a signal through the wireless communication unit 210 or through the backhaul communication unit 220. Also, the controller 240 may write and read data to and from the storage 230. In addition, the controller 240 may perform functions of a protocol stack required by the communication standard. According to another implementation example, the protocol stack may be included in the wireless communication unit 210. To this end, the controller 240 may include at least one processor. According to an embodiment, the controller 240 may control the base station 110 to perform operations according to embodiments to be described later.

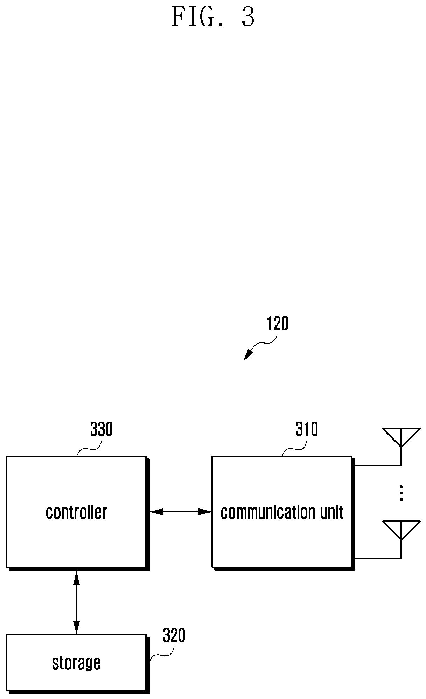

FIG. 3 is a diagram illustrating the structure of a UE in a wireless communication system according to an embodiment of the disclosure.

The configuration shown in FIG. 3 may be understood as a configuration of the UE 120. A term such as "... unit" or "... device" used herein means a unit that processes at least one function or operation, and may be implemented with hardware, software, or a combination thereof.

With reference to FIG. 3, the UE 120 may include a communication unit 310, a storage 320, and/or a controller 330. However, the components of the UE 120 are not limited to those described above. For example, the UE 120 may include more or fewer components than those components described above. In addition, the communication unit 310, storage 320, and controller 330 may be implemented in the form of a single chip. Further, the controller 330 may include one or more processors.

The communication unit 310 may perform functions for transmitting and receiving signals through a radio channel. For example, the communication unit 310 may perform conversion between a baseband signal and a bit stream in accordance with the physical layer specification of the system. For instance, for data transmission, the communication unit 310 may generate complex symbols by encoding and modulating a transmission bit stream. Further, for data reception, the communication unit 310 may restore a reception bit stream by demodulating and decoding a baseband signal. In addition, the communication unit 310 may perform up-conversion of a baseband signal into an RF band signal and transmit the converted signal through an antenna, and may perform down-conversion of an RF-band signal received through an antenna into a baseband signal. For example, the communication unit 310 may include a transmission filter, a reception filter, an amplifier, a mixer, an oscillator, a DAC, and an ADC.

In addition, the communication unit 310 may include a plurality of transmission and reception paths. Further, the communication unit 310 may include at least one antenna array composed of plural antenna elements. In terms of hardware, the communication unit 310 may be composed of a digital circuit and an analog circuit (e.g., radio frequency integrated circuit (RFIC)). Here, the digital circuit and the analog circuit may be implemented as a single package. Also, the communication unit 310 may include a plurality of RF chains. Further, the communication unit 310 may perform beamforming.

The communication unit 310 may transmit and receive signals as described above. Hence, the whole or a part of the communication unit 310 may be referred to as 'transmitter', 'receiver', or 'transceiver'. Also, in the following description, transmission and reception performed through a radio channel may be used as having a meaning of processing performed by the communication unit 310 as described above.

The storage 320 may store data such as basic programs, application programs, and configuration information for the operation of the UE 120. The storage 320 may be configured as a volatile memory, a non-volatile memory, or a combination thereof. In addition, the storage 320 may provide stored data in response to a request from the controller 330.

The controller 330 controls the overall operation of the UE 120. For example, the controller 330 may transmit and receive signals through the communication unit 310. Also, the controller 330 may write and read data to and from the storage 320. In addition, the controller 330 may perform the functions of a protocol stack required by the communication standard. To this end, the controller 330 may include at least one processor or microprocessor, or the controller 330 may be a part of a processor. Further, a part of the communication unit 310 and the controller 330 may be referred to as a communication processor (CP). According to an embodiment, the controller 330 may control the UE 120 to perform operations according to embodiments to be described later.

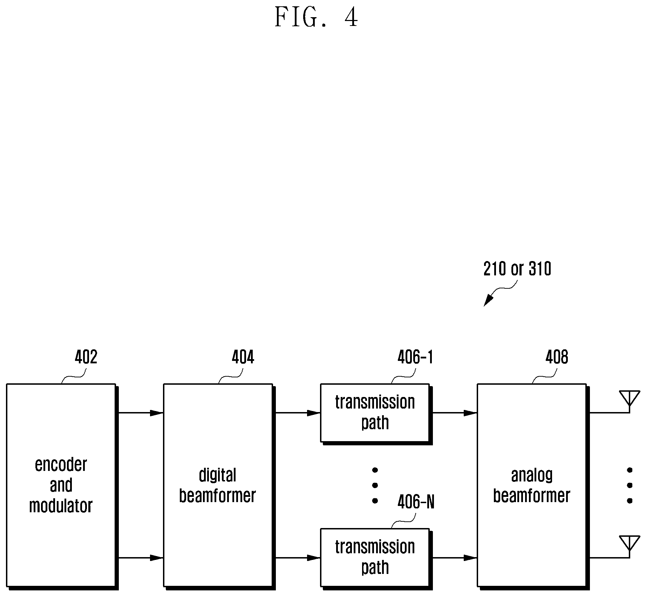

FIG. 4 is a diagram illustrating the configuration of a communication unit in a wireless communication system according to an embodiment of the disclosure.

FIG. 4 illustrates a detailed configuration of the wireless communication unit 210 in FIG. 2 or the communication unit 310 in FIG. 3. Specifically, FIG. 4 shows components for performing beamforming as a part of the wireless communication unit 210 in FIG. 2 or the communication unit 310 in FIG. 3.

With reference to FIG. 4, the wireless communication unit 210 or the communication unit 310 according to an embodiment of the disclosure may include an encoder and modulator 402, a digital beamformer 404, a plurality of transmission paths 406-1 to 406-N, and/or an analog beamformer 408.

The encoder and modulator 402 may perform channel encoding. For channel encoding, at least one of a low density parity check (LDPC) code, a convolution code, or a polar code may be used. The encoder and modulator 402 may generate modulation symbols by performing constellation mapping.

The digital beamformer 404 may perform beamforming on a digital signal (e.g., modulation symbols). To this end, the digital beamformer 404 may multiply the modulation symbols by beamforming weights. The beamforming weights are used to change the magnitude and phase of a signal, and may be referred to as 'precoding matrix' or 'precoder'. The digital beamformer 404 may output the digitally beamformed modulation symbols to the plural transmission paths 406-1 to 406-N. Here, according to the multiple input multiple output (MIMO) transmission scheme, the modulation symbols may be multiplexed, or the same modulation symbols may be provided to multiple transmission paths 406-1 to 406-N.

The plural transmission paths 406-1 to 406-N may convert digitally beamformed digital signals into an analog signal. To this end, each of the plural transmission paths 406-1 to 406-N may include an inverse fast Fourier transform (IFFT) calculator, a cyclic prefix (CP) inserter, a DAC, and/or an up converter. The CP inserter is for orthogonal frequency division multiplexing (OFDM), and may be omitted when another physical layer scheme (e.g., filter bank multi-carrier (FBMC)) is applied. That is, the plural transmission paths 406-1 to 406-N may provide independent signal processing processes for a plurality of streams generated through digital beamforming. However, depending on the implementation scheme, some of the components of the plural transmission paths 406-1 to 406-N may be used in common.

The analog beamformer 408 may perform beamforming on an analog signal. To this end, the digital beamformer 404 may multiply analog signals by beamforming weights. The beamforming weights may be used to change the magnitude and phase of a signal. Specifically, the analog beamformer **408** may be configured in various ways according to the connection structure between the plural transmission paths 406-1 to 406-N and antennas. For example, each of the plural transmission paths 406-1 to 406-N may be connected to one antenna array. As another example, the plural transmission paths 406-1 to 406-N may be connected to one antenna array. As another example, the plural transmission paths 406-1 to 406-N may be adaptively connected to one antenna array or to two or more antenna arrays.

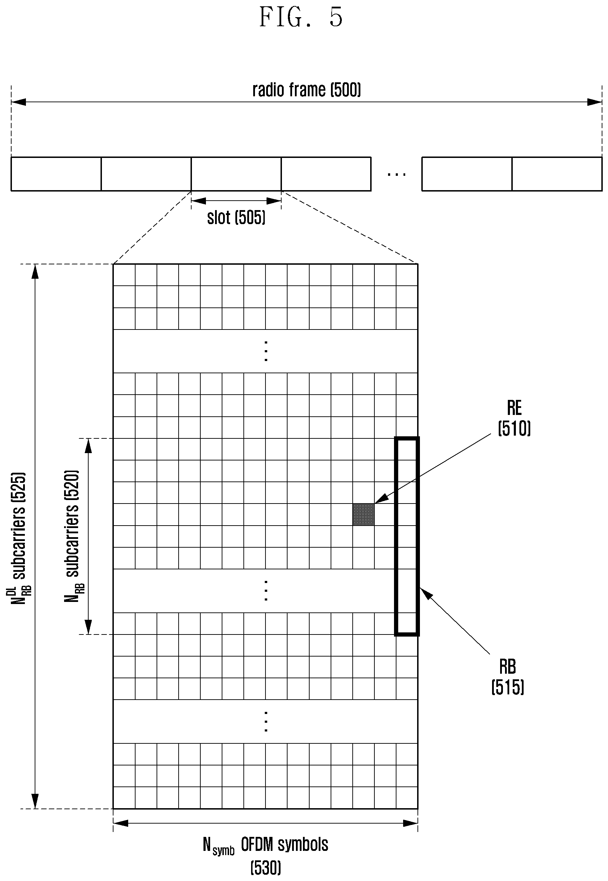

FIG. 5 is a diagram illustrating the structure of time-frequency resources in a wireless communication system according to an embodiment of the disclosure.

With reference to FIG. 5, in the radio resource region according to an embodiment of the disclosure, the horizontal axis represents the time domain and the vertical axis represents the frequency domain. The minimum transmission unit in the time domain is OFDM or DFT-S-OFDM symbols, and N_{symb} OFDM or DFT-S-OFDM symbols 530 may be included in one slot 505. In the NR system, unlike the slot, the length of a subframe may be defined as 1.0 ms, and the length of a radio frame 500 may be defined as 10 ms. The minimum transmission unit in the frequency domain is subcarriers, and the entire system transmission bandwidth may include a total of N_{BW} subcarriers 525. Specific values such as N_{symb} and N_{BW} may be variably applied depending on the system.

The basic unit of the time-frequency resource region is a resource element (RE) 510, which may be represented by an OFDM or DFT-S-OFDM symbol index and a subcarrier index. A resource block (RB) 515 may be defined as N_{RB} consecutive subcarriers 520 in the frequency domain. In general, the minimum transmission unit of data is an RB, and N_{symb} = 14 and N_{RB} = 12 in the NR system.

The structure of time-frequency resources as shown in FIG. 5 may be applied to the Uu interface. In addition, the time-frequency resource structure as shown in FIG. 5 may be similarly applied to the sidelink.

According to an embodiment of the disclosure, in a case where a UE (also referred to as remote UE or remote terminal) is connected to another UE via a sidelink relay (also referred to as relay or relay UE) to transmit and receive data, operation procedures of the UE, the sidelink relay, and the other UE for handling the integrity of packets are described.

A sidelink relay according to an embodiment of the disclosure may be authenticated to be used for at least one of a specific service, a specific UE, a specific sidelink flow, a specific sidelink bearer, a specific unicast link, a specific source identifier, or a specific destination identifier, or a combination thereof. The sidelink relay may establish a direct connection to an authenticated UE at the time of installation.

A sidelink relay according to an embodiment of the disclosure may establish a sidelink direct connection to an authenticated UE upon receiving a relay discovery message from the authenticated UE. The sidelink relay may establish a direct sidelink connection to the authenticated UE when it receives a relay discovery message from the authenticated UE as a response to a relay discovery message transmitted by the sidelink relay itself.

When the sidelink relay receives a PC5 direct link establishment request from an authenticated UE, it may establish a sidelink direct connection to the authenticated UE. The method of PC5 direct link establishment request used by the sidelink relay and the UE for relay connection may include at least one of including "connection via relay indication" in a normal PC5 direct link establishment request message, separately defining a "PC5 direct link establishment message for relaying", or configuring to use a normal PC5 direct link establishment request message transmitted on a sidelink radio bearer (may be denoted as SLRB) for relaying, or a combination thereof. However, the method of PC5 direct link establishment request used by the sidelink relay and the UE for relay connection is not limited to those described above.

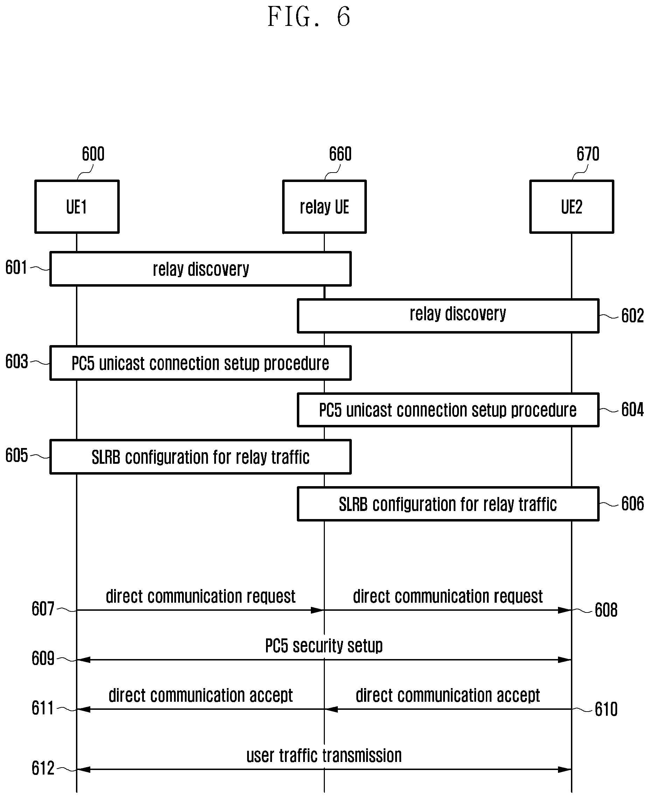

Next, with reference to FIG. 6, when establishing a direct connection between a UE and another UE through a sidelink relay to transmit and receive signaling and data, the procedure for establishing a sidelink unicast connection between the UE and the sidelink relay, a sidelink unicast connection between the sidelink relay and the other UE, and a sidelink unicast connection between the UE and the other UE through the sidelink relay will be described.

FIG. 6 is a diagram illustrating a procedure for processing configuration information for relaying signaling and data in a wireless communication system where a UE and another UE perform communication via a sidelink relay according to an embodiment of the disclosure.

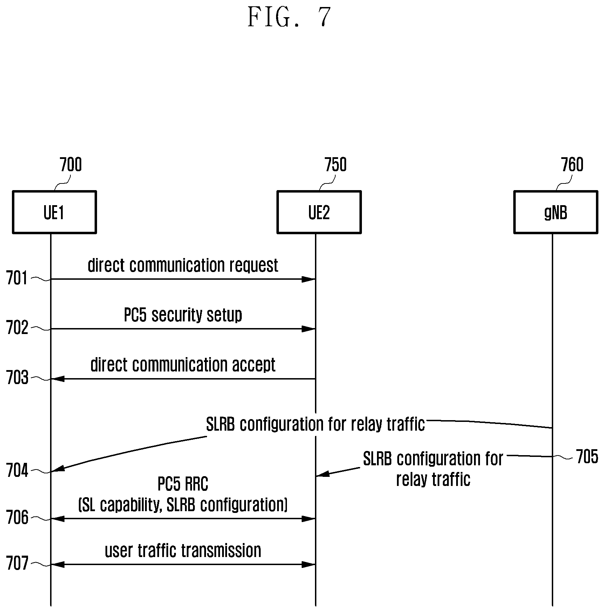

With reference to FIG. 6, UE1 600 may check whether it may establish a direct connection to UE2 670 and may determine to search for a sidelink relay 660 that can support direct connection to UE2 670. At step 601, UE1 600 may perform a relay discovery procedure. At step 601, UE1 600 may utilize a procedure for transmitting a relay discovery solicitation message to search for a sidelink relay capable of supporting direct connection to UE2 670 and receiving a relay discovery message from the sidelink relay. Or, at step 601, UE1 600 may utilize a procedure for monitoring a relay discovery message from a sidelink relay capable of supporting direct connection to UE2 670. Or, at step 601, UE1 600 may utilize a procedure for transmitting a PC5 direct link establishment request message including a "connection via relay indication" that indicates searching for a sidelink relay capable of relaying the connection between two UEs, where the PC5 direct link establishment request message (i.e., may correspond to the direct communication request message transmitted at step 701 of FIG. 7) is transmitted to establish a direct connection to UE2 670.

At step 602, the sidelink relay 660 may utilize a procedure for transmitting a relay discovery message to search for UE2 670 to which UE1 600 intends to establish a direct connection. Or, at step 602, the sidelink relay 660 may utilize a procedure for monitoring a relay discovery solicitation message transmitted by UE2 670 to which UE1600 intends to establish a direct connection, and transmitting a relay discovery message to UE2 670. Or, at step 602, to search for UE2 670 to which UE1 600 intends to establish a direct connection, the sidelink relay 660 may utilize a procedure for transmitting a PC5 direct link establishment request message carrying information about UE2 670 to which UE1 600 intends to establish a direct connection and a "connection via relay indication".

If UE1 600 determines that it can establish a direct connection to UE2 670 through the sidelink relay 660, at step 603, it may perform a unicast connection procedure with the sidelink relay 660. If UE2 670 determines that it can establish a direct connection to UE1 600 through the sidelink relay 660, at step 604, it may perform a unicast connection procedure with the sidelink relay 660. The sidelink unicast connection between UE1 600 and the sidelink relay 660 and the sidelink unicast connection between the sidelink relay 660 and UE2 670 may be established by performing steps 701 to 706 of FIG. 7. However, if there is no need for data transmission and reception between UE1 600 and the sidelink relay 660 or between UE2 670 and the sidelink relay 660, SLRB establishment, i.e., setup of a sidelink data radio bearer (SL-DRB), for data transmission and reception at step 706 may be omitted. A specified SLRB configuration may be applied to the sidelink signaling radio bearer (SL-SRB) (SL-SRB0, SL-SRB1, SL-SRB2, SL-SRB3) for transmitting and receiving sidelink signaling in the unicast connection setup procedure at steps 603 and 604 (step 605, step 606).

UE1 600 and UE2 670 may establish an end-to-end unicast connection separately from the unicast connection with the sidelink relay 660. Establishment of an end-to-end unicast connection may start with a procedure in which UE1 600 transmits a direct communication request message to UE2 670 through relay transmission of the sidelink relay 660 (step 607, step 608). However, if UE1 600 utilizes a procedure of transmitting a PC5 direct link establishment request message (i.e., may correspond to the direct communication request message transmitted at step 701 of FIG. 7) as a procedure for searching for a sidelink relay 660 that can support connection with UE2 670, steps 607 and 608 may be performed during the relay search procedure between the sidelink relay 660 and UE2 670 (step 601, step 602).

UE1 600 and UE2 670 may perform a PC5 security procedure for processing sidelink authentication and encryption key setup through relaying via the sidelink relay 660 (step 609). At step 609, the end-to-end PC5 security procedure between UE1 600 and UE2 670 may be configured as a procedure for exchanging encryption and integrity protection algorithms and parameters to support integrity protection and encryption (integrity, verification, ciphering) to be used in the PDCP (packet data convergence protocol) protocol for end-to-end data or signaling (PC5-S signaling, PC5-RRC) of UE1 600 and UE2 670. The sidelink relay 660 may have the relay adaptation layer above the RLC (radio link control) layer for relaying signaling and data of UE1 600 and UE2 670, and does not need to have the PDCP layer, RRC layer, and SDAP layer for relaying purposes. Hence, the PDCP layer, SDAP layer, and RRC layer may be configured only at UE1 600 and UE2 670 for data and signaling of UE1 600 and UE2 670. So, the function of processing integrity protection and encryption for data and/or signaling of UE1 600 and UE2 670 may be implemented in the PDCP layer of each end UE, i.e., UE1 600 and UE2 670, without having to be implemented in the sidelink relay 660. The encryption and integrity protection algorithms and parameters to support integrity protection and encryption to be used in the PDCP protocol may be exchanged through Direct Link Security Mode Command message and Direct Link Security Mode Complete message, which are PC5-S messages for establishing end-to-end PC5-S security between UE1 600 and UE2 670, and Direct Link Security Mode Command message and Direct Link Security Mode Complete message may be transmitted and received through relaying of the sidelink relay 660. UE1 600 and UE2 670 may determine whether to apply/not apply integrity protection to be used in the PDCP protocol and whether to apply/not apply encryption to be used in the PDCP protocol for data or signaling according to the determination of the end-to-end PC5-S security setup procedure. If security application in the PDCP protocol is activated (i.e., AS security is activated), data and signaling transmitted and received between UE1 600 and UE2 670 may be subject to integrity protection and/or encryption in the PDCP protocol. In the case of a data bearer in which end-to-end data is transmitted between UE1 600 and UE2 670, for all data bearers, the configuration for integrity protection application/non-application to be used in the PDCP protocol may be the same, and the configuration for encryption application/non-application to be used in the PDCP protocol may be the same. Although not shown in the drawing, the PC5-S security procedure may be used to update integrity protection and encryption algorithms and parameters in the PDCP protocol, and if the security key is changed, UE1 600 and UE2 670 may perform a PDCP reestablishment procedure to reconfigure the end-to-end PDCP entities.

Upon determining that the sidelink security procedure is performed normally, UE2 670 may perform a procedure of transmitting a direct communication accept message to UE1 600 through relaying of the sidelink relay 660 (step 610, step 611). Although not shown in FIG. 6, if exchange of sidelink UE capability information between UE1 600 and UE2 670 is required, sidelink UE capability messages may be transmitted and received between UE1 600 and UE2 (670) through relaying of the sidelink relay 660. In addition, although not shown in FIG. 6, RRC reconfiguration messages may be transmitted and received between UE1 600 and UE2 670 through relaying of the sidelink relay 660.

UE1600 and UE2 670 may transmit their own data to the counterpart UE through relaying of the sidelink relay 660 and may receive data of the counterpart UE through relaying of the sidelink relay 660 (step 612). Establishment of the end-to-end unicast connection may also start with a procedure in which UE2 670 first transmits a direct communication request message to UE1600 through relaying of the sidelink relay 660.

FIG. 7 is a diagram illustrating a procedure of processing configuration information for transmitting and receiving signaling and data in a wireless communication system that allows direct communication between UEs according to an embodiment of the disclosure.

With reference to FIG. 7, UE1 700 and UE2 750 are UEs that may establish a direct connection through the sidelink interface and transmit and receive data and signaling through the direct connection. At step 701, UE1 700 may transmit a direct communication request message to establish a direct connection to UE2 750.

When UE2 750 receives the direct communication request message at step 701, at step 702, UE2 750 may perform a PC5 security setup procedure, such as sidelink authentication and encryption key configuration, with UE1 700 for establishing a direct connection to UE1 700. Upon determining that sidelink authentication, encryption key configuration, or the like for establishing a direct connection between UE1 700 and UE2 750 have been performed normally, at step 703, UE2 750 may transmit a direct communication accept message to UE1 700.

UE1 700 and UE2 750 may perform a subsequent procedure for establishing a direct connection, and signaling for exchanging sidelink UE capability information may be exchanged between the RRC layers of UE1 700 and UE2 750 at step 706. At step 706, signaling for exchanging configuration information about a sidelink radio bearer (SLRB) for data transmission and reception may be exchanged between the RRC layers of UE1 700 and UE2 750.

The sidelink signaling radio bearers corresponding to the signaling transmitted and received between UE1 700 and UE2 750 at steps 701 to 706 may correspond to SL-SRB0, SL-SRB1, SL-SRB2, and SL-SRB3, and configuration information for SL-SRB0, SL-SRB1, SL-SRB2, and SL-SRB3 may be stored in UE1 700 and UE2 750 as a specified configuration.

There may be three examples of a method for UE1 700 and UE2 750 to obtain configuration information for sidelink data radio bearers (SL-DRB) corresponding to the data at step 706, as shown in Table 1.

**[Table 1]**

| |
|---|
| (1) When UE1 700 or UE2 750 is in RRC_CONNECTED state of having established an RRC connection with the base station, it may obtain configuration information for SL-DRB from the base station through a dedicated RRC message (step 704). UE1 700 or UE2 750 may provide information such as PQI (ProSe QoS indicator) and QoS profile for the QoS flow of transmission data to the base station, and the base station may provide SLRB configuration information to UE1700 or UE2 750 by referring to PQI, QoS profile, or the like for the QoS flow of transmission data. |
| (2) When UE1 700 or UE2 750 is in RRC_IDLE state or RRC_INACTIVE state of not establishing an RRC connection with the base station, it may obtain configuration information for SL-DRB from the base station through an SIB message (step 704). The SIB message composed and transmitted by the base station may include SLRB configuration information corresponding to PQI or QoS profile, and UE1 700 or UE2 750 may obtain SLRB configuration information corresponding to PQI (ProSe QoS indicator) and QoS profile for the QoS flow of transmission data from the SIB message. |
| (3) When UE1 700 or UE2 750 is in out-of-coverage state, it may obtain configuration information for the pre-configured SL-DRB. Pre-configuration information may be composed of SLRB configuration information corresponding to PQI (ProSe QoS indicator) and QoS profile, and UE1 700 or UE2 750 may obtain SLRB configuration information corresponding to PQI and QoS profile for the QoS flow of transmission data from the pre-configuration information. |

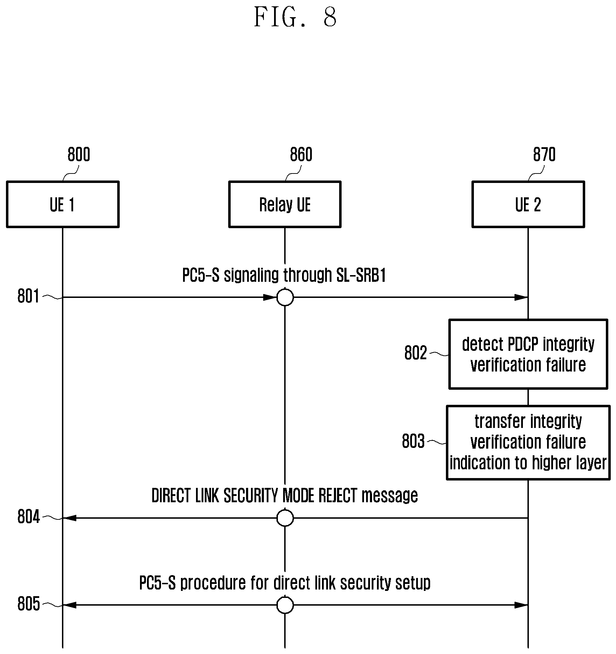

If UE1 700 or UE2 750 is the transmitting UE, UE1 700 or UE2 750 may obtain configuration information about the sidelink data radio bearer for the QoS flow corresponding to data to be transmitted by utilizing one of the three methods of Table 1, and may transmit SLRB configuration information for the QoS flow to UE2 750 or UE1 700 being the receiving UE through RRC layer signaling at step 706. The SLRB configuration information for the QoS flow of data to be applied by the receiving UE to reception (limited to RX only SLRB configuration information) may be determined by the receiving UE itself. UE1 700 and UE2 750 may transmit and receive data at step 707 by applying the SLRB configuration information configured at step 706 for data. In the case where a UE establishes a connection to another UE through a sidelink relay, when a sidelink unicast connection is established between the UE and the sidelink relay, the specified SLRB configuration may be applied to the signaling radio bearers (SL-SRB0, SL-SRB1, SL-SRB2, SL-SRB3) between the UE and the sidelink relay. In the case of processing integrity protection and encryption set for data and signaling between UE1 and UE2 according to various embodiments of the disclosure, integrity protection and encryption may be handled for the received data packets or signaling packets in the PDCP layer of UE1 or UE2 corresponding to the receiving UE. That is, this may include integrity protection and encryption processing on PDCP PDUs corresponding to data packets or PDCP PDUs corresponding to signaling packets. The receiving UE may determine whether integrity protection is successful or whether encryption is successful for the received data packet or signaling packet. Next, with reference to FIG. 8, a description will be given of the procedure for processing integrity protection for PDCP PDUs transmitted through relaying of the sidelink relay in correspondence to a signaling packet associated with SL-SRB1 between the transmitting UE and the receiving UE. The signaling packet corresponding to SL-SRB1 may include PC5-S signaling that carries information about integrity protection and encryption between the transmitting UE and the receiving UE.

FIG. 8 is a diagram illustrating a procedure for handling integrity protection of a signaling packet received through the sidelink relay according to an embodiment of the disclosure.

With reference to FIG. 8, UE1 800 and UE2 870 may transmit and receive data and signaling through relaying of the sidelink relay 860. UE1 800 may transmit PC5-S signaling corresponding to SL-SRB1 to UE2 870 through the sidelink relay 860 at step 801. If integrity protection is set for PC5-S signaling corresponding to SL-SRB1, UE1 800 may apply integrity protection to PC5-S signaling at step 801 and transmit it. Here, integrity protection handling of a PDCP PDU including PC5-S signaling may be performed by the transmitting PDCP entity of UE1 800. If integrity protection is not set for PC5-S signaling corresponding to SL-SRB1, UE1 800 may transmit PC5-S signaling at step 801 without applying integrity protection. In the disclosure of FIG. 8, it is assumed that integrity protection is set for PC5-S signaling corresponding to SL-SRB1. UE2 870 may be aware that integrity protection is applied to PC5-S signaling corresponding to SL-SRB1 received through relay forwarding of the sidelink relay 860 and determine whether integrity protection is successful at step 802. The operation of step 802 is processed in the receiving PDCP entity of UE2 870, and UE2 870 (i.e., receiving PDCP entity of UE2 870) may determine whether integrity protection is successful at the PDCP PDU including PC5-S signaling. If UE2 870 determines that integrity protection has failed for PC5-S signaling corresponding to SL-SRB1 at step 802, it may transfer information (e.g., integrity check failure indication) notifying that integrity protection fails for the corresponding packet to its higher layer (RRC layer, ProSe layer, PC5-S layer, or V2X layer) at step 803. UE2 870 may delete packets for which integrity protection is determined to be a failure and transmit a Direct Link Security Mode Reject message corresponding to PC5-S signaling to notify UE1800 of integrity protection failure at step 804. The Direct Link Security Mode Reject message at step 804 may correspond to PC5-S signaling of the higher layer of UE2 870, that is, the ProSe layer or PC5-S layer or the V2X layer that is in charge of integrity protection and encryption processing. At step 805, UE1 800 and UE2 870 may process integrity protection setup again through authentication and encryption procedures for the end-to-end connection between UE1 800 and UE2 870.

In the disclosure of FIG. 8, upon receiving PC5-S signaling notifying integrity protection failure for PC5-S signaling corresponding to PC5-SRB1 from UE2 870, UE1 800 may transfer an indication notifying PDCP integrity protection failure to its lower layer (e.g., RRC layer), and the lower layer (e.g., RRC layer) of UE1 800 may trigger a PDCP reestablishment procedure for UE2 870. If the higher layer of UE2 870 determines that integrity protection has failed for PC5-S signaling corresponding to PC5-SRB1, it may transfer an indication notifying PDCP integrity protection failure to its lower layer (e.g., RRC layer), and the lower layer (e.g., RRC layer) of UE2 870 may trigger a PDCP reestablishment procedure for UE1 800. Operations that can be performed when PDCP integrity protection failure is indicated to the lower layers (e.g., RRC layer) of UE1 800 and UE2 870 may include the following.

**[Table 2]**

| |
|---|
| - Suspend all transmissions of SL-SRB and SL-DRB to UE2 870 or UE1 800. |
| - Reestablish transmitting and receiving PDCP entities for UE2 870 or UE1 800. |
| - UE1 800 and UE2 870 may perform relay configuration release, MAC reset, RLC reestablishment, or RLC release with the sidelink relay 860. |
| - To perform this procedure, UE1 800 and UE2 870 may transmit a PC5 RRC message (e.g., notification message) to the sidelink relay 860 to notify PDCP reestablishment due to sidelink integrity protection failure for UE2 870 and UE1 800. |

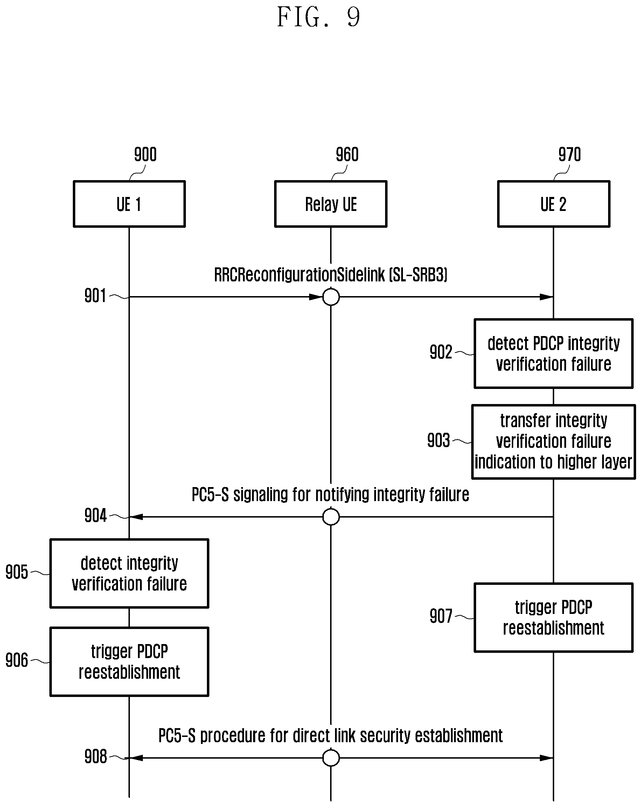

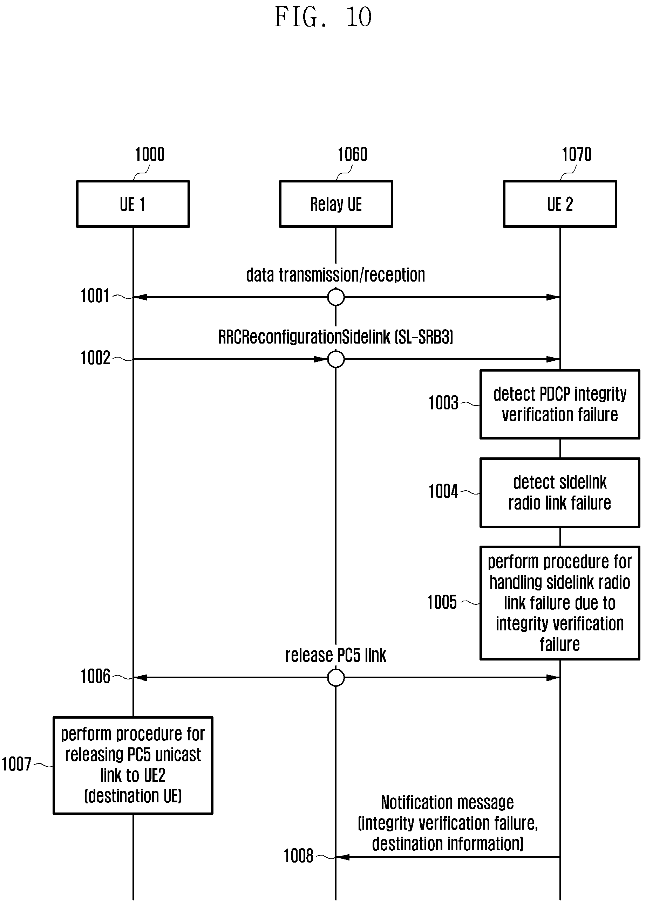

Next, with reference to FIGS. 9 and 10, a description will be given of a procedure for processing integrity protection as to signaling packets transmitted through relaying of the sidelink relay in correspondence to SL-SRB2 and SL-SRB3 between the transmitting UE and the receiving UE. The signaling packet corresponding to SL-SRB2 and SL-SRB3 may reflect integrity protection and encryption settings between the transmitting UE and the receiving UE, and may include PC5-S signaling and PC5-RRC messages for which integrity protection or/and encryption may be set. That is, the transmitting UE and the receiving UE may process integrity protection or/and encryption for PDCP PDUs corresponding to the SL-SRB2 signaling packet or the SL-SRB3 signaling packet. FIG. 9 is a diagram illustrating a procedure of handling integrity protection for a signaling packet received via a sidelink relay according to an embodiment of the disclosure.

With reference to FIG. 9, UE1 900 and UE2 970 may transmit and receive data and signaling through relaying of the sidelink relay 960. UE1 900 may transmit a PC5 RRC message corresponding to SL-SRB3 to UE2 970 through the sidelink relay 960 at step 901. The disclosure of FIG. 9 may also be applied to PDCP PDUs including PC5-S signaling corresponding to SL-SRB2. If UE1 900 and UE2 970 are configured to set integrity protection for the PC5 RRC message corresponding to SL-SRB3, UE1 900 may apply integrity protection to the PDCP PDU of the PC5 RRC message and transmit it at step 901. The operation of step 901 may be performed by the transmitting PDCP entity of UE1 900. If configured not to set integrity protection for the PC5 RRC message corresponding to SL-SRB3, UE1 900 may transmit the PC5 RRC message at step 901 without applying integrity protection. In the disclosure of FIG. 9, it is assumed that integrity protection is set for the PC5 RRC message corresponding to SL-SRB3. UE2 970 may be aware that integrity protection is applied to the PC5 RRC message received through relaying of the sidelink relay 960 in correspondence to SL-SRB3 and may determine whether integrity protection is successful at step 902. The operation of step 902 may be processed by the receiving PDCP entity of UE2 970. If UE2 970 determines that integrity protection has failed for the PC5 RRC message corresponding to SL-SRB3 at step 902, it may transfer information notifying integrity protection failure for the corresponding packet to its higher layer (RRC layer, ProSe layer, PC5-S layer, or V2X layer) at step 903. UE2 970 may delete packets for which integrity protection is determined to be a failure and transmit PC5-S signaling to UE1 900 to notify integrity protection failure at step 904. PC5-S signaling at step 904 may be a Direct Link Security Mode Reject message or correspond to PC5-S signaling separately defined for the purpose of notifying integrity protection failure as to PC5-S signaling corresponding to SL-SRB2 or the PC5 RRC message corresponding to SL-SRB3. PC5-S signaling at step 904 may correspond to PC5-S signaling of the higher layer of UE2 970, i.e., the ProSe layer, the PC5-S layer, or the V2X layer that is in charge of integrity protection and encryption processing. At step 905, upon receiving PC5-S signaling indicating integrity protection failure for PC5-S signaling corresponding to SL-SRB2 received at step 904 or the PC5 RRC message corresponding to SL-SRB3, UE1 900 may identify a PDCP integrity protection failure.

The higher layer of UE1 900 may instruct its RRC layer or PDCP layer to trigger PDCP entity re-establishment due to integrity protection failure for PDCP PDUs (step 906). If necessary, the higher layer of UE2 970 may instruct its RRC layer or PDCP layer to trigger PDCP entity re-establishment due to PDCP integrity protection failure (step 907). UE1 900 may suspend packet transmission corresponding to all SL-SRBs and SL-DRBs for UE2 970. UE1 900 may trigger PDCP entity reestablishment at step 906. UE2 970 may trigger PDCP entity reestablishment at step 907. UE1 900 may perform MAC entity reset, RLC entity reestablishment or RLC entity release with the sidelink relay 960 in relation to the connection to UE2 970. UE2 970 may perform MAC entity reset, RLC entity reestablishment or RLC entity release with the sidelink relay 960 in relation to the connection to UE1 900. Here, UE1 900 and UE2 970 may transmit a PC5 RRC message (e.g., notification message) to the sidelink relay 960 for the purpose of notifying PDCP reestablishment for the counterpart UE due to integrity protection failure and notifying MAC entity reset, RLC entity reestablishment, or RLC entity release. This notification message may also be used by the sidelink relay 960 to release sidelink relay configuration information for UE1 900 and UE2 970.

For example, in the disclosure of FIG. 9, upon receiving PC5-S signaling notifying integrity protection failure as to the PC5 RRC message corresponding to PC5-SRB3 from UE2 970, UE1900 may transfer an indication notifying PDCP integrity protection failure to its lower layer (e.g., RRC layer), and the lower layer (e.g., RRC layer) of UE1 900 may trigger a PDCP reestablishment procedure for UE2 970. If the upper layer of UE2 970 identifies an integrity protection failure for the PC5 RRC message corresponding to PC5-SRB3, it may transfer an indication notifying the PDCP integrity protection failure to its lower layer (e.g., RRC layer), and the lower layer (e.g., RRC layer) of UE2 970 may trigger a PDCP reestablishment procedure for UE1 900. Operations that can be performed when a PDCP integrity protection failure is indicated to lower layers (e.g., RRC layer) of UE1 900 and UE2 970 may include the following.

**[Table 3]**

| |
|---|
| - Suspend all transmissions of SL-SRB, SL-DRB to UE2 970 or UE1 900 |
| - Reestablish transmitting and receiving PDCP entities for UE2 970 or UE1 900 |
| - UE1 900 and UE2 970 may perform relay configuration release, MAC reset, RLC reestablishment, or RLC release with the sidelink relay 960. |
| - To perform this procedure, UE1 900 and UE2 970 may transmit a PC5 RRC message (e.g., notification message) to the sidelink relay 960 to notify PDCP reestablishment due to sidelink integrity protection failure for UE2 970 and UE1 900. |

UE1900 and UE2 970 may perform authentication and encryption procedures for the end-to-end connection at the higher layer (e.g., ProSe layer, PC5-S layer, or V2X layer) during the PDCP reestablishment procedure at step 908, and may process the integrity protection configuration again. FIG. 10 is a diagram illustrating a procedure for handling integrity protection as to a signaling packet received through a sidelink relay according to an embodiment of the disclosure.

With reference to FIG. 10, UE1 1000 and UE2 1070 may transmit and receive data and signaling through relaying of the sidelink relay 1060 at step 1001. UE1 1000 may transmit a PC5 RRC message corresponding to SL-SRB3 to UE2 1070 through the sidelink relay 1060 at step 1002. The disclosure of FIG. 10 may also be applied to PDCP PDUs including PC5-S signaling corresponding to SL-SRB2. If UE1 1000 and UE2 1070 are configured to set PDCP integrity protection for the PC5 RRC message corresponding to SL-SRB3, UE1 1000 may apply integrity protection to PDCP PDUs of the PC5 RRC message and transmit it at step 1002. The operation of step 1002 may be performed by the transmitting PDCP entity of UE1 1000. If configured not to set integrity protection for the PC5 RRC message corresponding to SL-SRB3, UE1 1000 may transmit the PC5 RRC message without applying integrity protection at step 1002. In the disclosure of FIG. 10, it is assumed that integrity protection is set for the PC5 RRC message corresponding to SL-SRB3. UE2 1070 may be aware that integrity protection is applied to the PC5 RRC message corresponding to SL-SRB3 received through relaying of the sidelink relay 1060, and may determine whether integrity protection is successful at step 1003. The operation of step 1003 may be processed by the receiving PDCP entity of UE2 1070. Upon determining that integrity protection has failed for the PC5 RRC message corresponding to SL-SRB3 at step 1003, UE2 1070 may determine that a failure has occurred in the sidelink radio link with UE1 1000 at step 1004. UE2 1070 may perform a procedure for handling sidelink radio link failure (RLF) due to PDCP integrity protection failure at step 1005. The procedure performed by UE2 1070 when a sidelink radio link failure occurs due to PDCP integrity protection failure may include, for example, the following. UE2 1070 may perform a procedure to release the PC5 RRC connection to UE1 1000 at step 1006. UE1 1000 may perform a procedure to release the PC5 unicast link to UE2 1070 at step 1007. UE2 1070 may transmit a PC5 RRC message (e.g., notification message) to the sidelink relay 1060, which relays data and signaling with UE1 1000, to notify the failure of PDCP integrity protection with UE1 1000 at step 1008. The procedure for handling sidelink radio link failure due to PDCP PDU integrity protection failure, performed between UE2 1070, UE1 1000 and sidelink relay 1060, including steps 1006, 1007 and 1008 above is as follows.

**[Table 4]**

| |
|---|
| (Here, this destination refers to the destination layer 2 ID corresponding to UE1 1000) |
| - UE releases the DRBs of this destination. (DRB release with UE1 1000) |
| - UE releases the SRBs of this destination. (SRB release with UE1 1000) |
| - UE releases the NR sidelink communication related configuration of this destination. (release the configuration information set for transmitting and receiving data and signaling with UE1 1000) |
| - UE considers the PC5-RRC connection is released for the destination. (release PC5 RRC connection with UE1 1000) |
| - UE indicates the release of the PC5-RRC connection to the upper layers for this destination (PC5 is unavailable). (upper layers of UE2 1070 may be notified that PC5 RRC connection with UE1 1000 has been released) |
| - UE sends a notification message to its connected Relay UE about sidelink radio |
| failure for the PC5-RRC connection for this destination. (May transmit a notification message to the sidelink relay 1060 relaying data and signaling with UE1 1000 to inform that a sidelink radio link failure has occurred for PC5 RRC with UE1 1000. The sidelink relay 1060 may perform procedures for releasing sidelink relay configuration information with UE1 1000 and UE2 1070, resetting sidelink MAC, releasing sidelink RLC, or reestablishing sidelink RLC.) |
| This notification message can trigger relay configuration release of this destination, sidelink RLC release (or reestablishment) between Remote UE and Relay UE, sidelink specific MAC reset between Remote UE and Relay UE. |
| -> This can happen for PC5 link between Relay UE and source Remote UE of this destination (triggered by Relay UE or triggered by Source Remote UE due to PC5 link release). |
| - If Relay UE is not to be changed for this destination, then relay configuration and sidelink RLC, and sidelink MAC can be kept for this destination. |
| -> Source Remote UE and Destination Remote UE can perform PC5 link establishment procedures and/or PC5 RRC connection setup procedures via the Relay UE. These procedures can modify existing relay configuration, sidelink RLC configuration, sidelink MAC configuration if needed. |

UE1 1000 and UE2 1070 may perform an end-to-end PC5 direct link release procedure, perform an end-to-end PC5 direct link establishment procedure, perform an authentication and encryption procedure for the end-to-end connection during the PC5 direct link establishment procedure, and process the integrity protection configuration again. The transmitting PDCP entity re-establishment procedure performed by UE1 and UE2 in the disclosure of FIG. 8, FIG. 9 and FIG. 10 may include the following.

**[Table 5]**

| |
|---|
| When upper layers request a PDCP entity re-establishment, the transmitting PDCP entity shall: |
| - for SRBs and UM DRBs, set TX_NEXT to the initial value; |
| - for SRBs, discard all stored PDCP SDUs and PDCP PDUs; |
| - apply the ciphering algorithm and key provided by upper layers during the PDCP entity re-establishment procedure; |
| - apply the integrity protection algorithm and key provided by upper layers during the PDCP entity re-establishment procedure; |
| - for UM DRBs, for each PDCP SDU already associated with a PDCP SN but for which a corresponding PDU has not previously been submitted to lower layers, and; |
| - for AM DRBs whose PDCP entities were not suspended, from the first PDCP SDU for which the successful delivery of the corresponding PDCP Data PDU has not been confirmed by lower layers, perform retransmission or transmission of all the PDCP SDUs already associated with PDCP SNs in ascending order of the COUNT values associated to the PDCP SDU prior to the PDCP entity re-establishment as specified below: |
| - perform header compression of the PDCP SDU using ROHC and/or using EHC |
| - perform integrity protection and ciphering of the PDCP SDU using the COUNT value associated with this PDCP SDU |
| - submit the resulting PDCP Data PDU to lower layer |

The receiving PDCP entity reestablishment procedure performed by UE1 and UE2 in the disclosure of FIG. 8, FIG. 9 and FIG. 10 may include the following.

**[Table 6]**

| |
|---|
| When upper layers request a PDCP entity re-establishment, the receiving PDCP entity shall: |
| - process the PDCP Data PDUs that are received from lower layers due to the re-establishment of the lower layers |
| - for SRBs, discard all stored PDCP SDUs and PDCP PDUs; |
| - for SRBs, UM DRBs and UM MRBs, if *t-Reordering* is running: |
| - stop and reset *t-Reordering*; |
| - for UM DRBs, deliver all stored PDCP SDUs to the upper layers in ascending order of associated COUNT values after performing header decompression; |
| - for AM DRBs, perform header decompression using ROHC for all stored PDCP IP SDUs; |
| - for SRBs and UM DRBs, set RX_NEXT and RX_DELIV to the initial value; |
| - apply the ciphering algorithm and key provided by upper layers during the PDCP entity re-establishment procedure; |
| - apply the integrity protection algorithm and key provided by upper layers during the PDCP entity re-establishment procedure. |
| - NOTE: After PDCP re-establishment on a sidelink SRB/DRB, UE determines when to transmit and receive with the new key and discard the old key as specified in TS 33.536 |

The methods according to the embodiments described in the claims or specification of the disclosure may be implemented in the form of hardware, software, or a combination thereof. When implemented in software, a computer-readable storage medium storing one or more programs (software modules) may be provided. The one or more programs stored in the computer-readable storage medium may be configured to be executable by one or more processors of an electronic device. The one or more programs may include instructions that cause the electronic device to execute the methods according to the embodiments described in the claims or specification of the disclosure. Such a program (software module, software) may be stored in a random access memory, a nonvolatile memory such as a flash memory, a read only memory (ROM), an electrically erasable programmable read only memory (EEPROM), a magnetic disc storage device, a compact disc ROM (CD-ROM), a digital versatile disc (DVD), other types of optical storage devices, or a magnetic cassette. Or, such a program may be stored in a memory composed of a combination of some or all of them. In addition, a plurality of component memories may be included.

In addition, such a program may be stored in an attachable storage device that can be accessed through a communication network such as the Internet, an intranet, a local area network (LAN), a wide LAN (WLAN), or a storage area network (SAN), or through a communication network composed of a combination thereof. Such a storage device may access the device that carries out an embodiment of the disclosure through an external port. In addition, a separate storage device on a communication network may access the device that carries out an embodiment of the disclosure.

In the embodiments of the disclosure described above, the elements included in the disclosure are expressed in a singular or plural form according to the presented specific embodiment. However, the singular or plural expression is appropriately selected for ease of description according to the presented situation, and the disclosure is not limited by a single element or plural elements. Those elements described in a plural form may be configured as a single element, and those elements described in a singular form may be configured as plural elements.

Meanwhile, although the detailed description of the disclosure has described specific embodiments, it is apparent that various modifications are possible without deviating the scope of the disclosure. Therefore, the scope of the disclosure should not be limited to those described embodiments, but should be defined by both the scope of the claims described below and their equivalents.

## Claims

1. A method performed by a first user equipment (first UE) in a wireless communication system, the method comprising:
detecting a packet data convergence protocol (PDCP) integrity verification failure;
detecting a sidelink radio link failure (RLF) due to the PDCP integrity verification failure;
releasing a sidelink connection to a second UE in response to the sidelink radio link failure; and
transmitting, to a relay UE, a message notifying the sidelink radio link failure due to the PDCP integrity verification failure.

2. The method of claim 1, wherein the second UE transmits, to the relay UE, the message notifying the sidelink radio link failure due to the PDCP integrity verification failure.

3. The method of claim 1, wherein releasing a sidelink connection to a second UE comprises:
releasing at least one of a data radio bearer (DRB) with the second UE, a signaling radio bearer (SRB) with the second UE, configuration information set for transmitting and receiving data and signaling with the second UE, or a PC5 radio resource control (RRC) connection to the second UE.

4. The method of claim 1, wherein the relay UE performs a procedure for releasing sidelink relay configuration information for the first UE and the second UE, resetting sidelink medium access control (MAC), and releasing or reestablishing sidelink radio link control (RLC) based on the message.

5. A method performed by a second user equipment (second UE) in a wireless communication system, the method comprising:
releasing a sidelink connection to a first UE in response to a sidelink radio link failure (RLF) at the first UE; and
transmitting, to a relay UE, a message notifying the sidelink radio link failure due to a packet data convergence protocol (PDCP) integrity verification failure,
wherein the PDCP integrity verification failure is detected by the first UE, and the sidelink radio link failure is detected due to the PDCP integrity verification failure.

6. The method of claim 5, wherein the first UE transmits, to the relay UE, the message notifying the sidelink radio link failure due to the PDCP integrity verification failure.

7. The method of claim 5, wherein releasing a sidelink connection to a first UE comprises:
releasing at least one of a data radio bearer (DRB) with the first UE, a signaling radio bearer (SRB) with the first UE, configuration information set for transmitting and receiving data and signaling with the first UE, or a PC5 radio resource control (RRC) connection to the first UE.

8. The method of claim 5, wherein the relay UE performs a procedure for releasing sidelink relay configuration information for the first UE and the second UE, resetting sidelink medium access control (MAC), and releasing or reestablishing sidelink radio link control (RLC) based on the message.

9. A first user equipment (first UE) in a wireless communication system, comprising:
a transceiver capable of transmitting and receiving at least one signal; and
a controller coupled with the transceiver,
wherein the controller is configured to:
detect a packet data convergence protocol (PDCP) integrity verification failure;
detect a sidelink radio link failure (RLF) due to the PDCP integrity verification failure;
release a sidelink connection to a second UE in response to the sidelink radio link failure; and
transmit, to a relay UE, a message notifying the sidelink radio link failure due to the PDCP integrity verification failure.

10. The first UE of claim 9, wherein the second UE transmits, to the relay UE, the message notifying the sidelink radio link failure due to the PDCP integrity verification failure.

11. The first UE of claim 9, wherein the controller is configured to release at least one of a data radio bearer (DRB) with the second UE, a signaling radio bearer (SRB) with the second UE, configuration information set for transmitting and receiving data and signaling with the second UE, or a PC5 radio resource control (RRC) connection.

12. The first UE of claim 9, wherein the relay UE performs a procedure for releasing sidelink relay configuration information for the first UE and the second UE, resetting sidelink medium access control (MAC), and releasing or reestablishing sidelink radio link control (RLC) based on the message.

13. A second user equipment (second UE) in a wireless communication system, comprising:
a transceiver capable of transmitting and receiving at least one signal; and
a controller coupled with the transceiver,
wherein the controller is configured to:
release a sidelink connection to a first UE in response to a sidelink radio link failure (RLF) at the first UE; and
transmit, to a relay UE, a message notifying the sidelink radio link failure due to a packet data convergence protocol (PDCP) integrity verification failure,
wherein the PDCP integrity verification failure is detected by the first UE, and the sidelink radio link failure is detected due to the PDCP integrity verification failure.

14. The second UE of claim 13, wherein the controller is configured to release at least one of a data radio bearer (DRB) with the first UE, a signaling radio bearer (SRB) with the first UE, configuration information set for transmitting and receiving data and signaling with the first UE, or a PC5 radio resource control (RRC) connection to the first UE.

15. The second UE of claim 13, wherein the relay UE performs a procedure for releasing sidelink relay configuration information for the first UE and the second UE, resetting sidelink medium access control (MAC), and releasing or reestablishing sidelink radio link control (RLC) based on the message.
